# FASCICULE DE BREVET EUROPEEN

(11) **EP 1 066 471 B1**
(45) Date de publication et mention de la délivrance du brevet: **29.05.2002**
(21) Numéro de dépôt: 99909072.3
(22) Date de dépôt: 22.03.1999
(51) Int. Cl.: F03B 1/02, F01D 5/34

(54) **ROUE DE TURBINE ET TURBINE DE TYPE PELTON EQUIPEE D'UNE TELLE ROUE**
PELTON TURBINENLAUFRAD UND PELTONTURBINE MIT EINEM SOLCHEN LAUFRAD
TURBINE WHEEL AND PELTON TURBINE EQUIPPED WITH SAME

(30) Priorité: 23.03.1998 FR 9803780
(43) Date de publication de la demande: 10.01.2001
(73) Titulaire: ALSTOM Power Hydro, 38100 Grenoble (FR)
(72) Inventeur: ROSSI, Georges, F-38330 Saint Ismier (FR); FINET, Louis, F-38450 Vif (FR); ROMAN, Jean, Marie, F-38130 Echirolles (FR)
(74) Mandataire: Myon, Gérard Jean-Pierre
(86) Numéro de dépôt international: FR9900670
(87) Numéro de publication internationale: WO9949213

(56) Documents cités:
- FR-A- 570 124
- FR-A- 704 875
- GB-A- 688 577

## Description

L'invention a trait à une roue de turbine et à une turbine de type Pelton équipée d'une telle roue comme décrit dans le document GB-A-688 577.

Les turbines Pelton sont classiquement utilisées pour transformer l'énergie cinétique d'un fluide, tel que l'eau d'une chute d'eau, en énergie mécanique. Cette transformation s'effectue par la mise en rotation de la roue de turbine sous l'effet d'un effort tangentiel exercé, sur des augets disposés à la périphérie d'une jante, par un jet d'eau sortant d'un ou plusieurs injecteurs répartis autour de la roue.

L'effort créé sur chaque auget est transmis à la jante à travers une section d'attache de l'auget sur la jante. Cette section d'attache, définie par l'intersection géométrique de l'auget avec la jante, est soumise à des contraintes mécaniques importantes. En effet, chaque auget peut être modélisé mécaniquement comme une poutre encastrée sur un seul côté, de sorte qu'il subit un effort de flexion important dû à l'effort du jet. En outre, des contraintes vibratoires élevées sont appliquées à l'auget et il existe un danger d'entrée en résonance de l'auget ou de la jante.

Dans les dispositifs connus, notamment de EP-A-0 346 681 ou de EP-A-0 522 336, on a tenté de pallier ces inconvénients en renforçant la section d'attache des augets sur la jante. Ceci conduit à des structures compliquées, donc onéreuses et dont la fiabilité est diminuée. En outre, chaque auget demeure attaché à la jante par un seul côté, de sorte que la nature des problèmes rencontrés n'est pas fondamentalement modifiée.

FR-A-704 875 enseigne de faire appuyer les godets d'une turbine les uns sur les autres au moyen d'anneaux montés sur leur pourtour. La répartition des efforts n'est pas optimale et des bras doivent être intercallés entre des godets adjacents, en étant montés avec le plus grand soin, ce qui résulte dans une inhomogénéité de la répartition des efforts.

C'est à ces problèmes qu'entend plus particulièrement remédier l'invention en proposant une roue de turbine de type Pelton dans laquelle les augets sont reliés à la jante d'une manière telle que les contraintes mécaniques ne sont pas concentrées dans une zone d'attache de l'auget à la jante et que les dangers d'entrée en résonance de la roue sont sensiblement diminués, grâce à une répartition d'efforts optimisée.

Dans cet esprit, l'invention concerne une roue du type précité qui comprend au moins un flasque annulaire solidaire de la jante et pourvu de logements de réception des augets. Ce flasque est apte à absorber une partie au moins des efforts transmis par les augets à la jante et forme une bande périphérique au niveau des zones radiales externes des logements.

Grâce à l'invention, le flasque qui est monobloc et entoure les augets permet de les supporter, à proximité de la jante, dans une zone intermédiaire et dans une zone radiale externe, de sorte que chaque auget est maintenu efficacement dans ses zones radiales interne et externe et centrale et que l'effort qu'il subit, du fait de l'existence du jet de fluide d'entraînement de la turbine, a pour effet de le plaquer sur le flasque. Cet effort n'est alors pas concentré uniquement dans une zone d'attache de l'auget à la jante, mais réparti sur l'ensemble du flasque. En d'autres termes, l'effort tangentiel créé sur un auget est transmis au flasque. L'auget et la partie du flasque supportant l'auget peuvent être modélisés mécaniquement comme une poutre sur deux appuis, voire une poutre en appui sur sa longueur, le premier appui étant du côté de la jante, alors que le second appui est constitué par la bande périphérique du flasque. Cette distribution des efforts induit une diminution des contraintes exercées sur les composants mécaniques, ce qui permet d'envisager des pièces de moindre épaisseur.

Compte tenu de ce qui précède, une roue de turbine conforme à l'invention peut être réalisée en métal, en matière composite ou avec une structure mixte. Par exemple, certaines pièces, telles que la jante ou le flasque, sont réalisées en métal, alors que d'autres pièces, telles que les augets, sont réalisées en matière synthétique composite. Une jante ou un flasque en matière plastique composite peuvent également être associés à des augets métalliques.

En outre, la présence de la bande périphérique externe du flasque, qui crée une continuité de matière à l'extérieur de la roue, permet de diminuer sensiblement les contraintes vibratoires exercées sur les augets. En effet, la bande périphérique contribue à répartir ces contraintes sur les différents augets, de sorte que le mode propre équivalent de chaque auget n'est plus celui d'une poutre encastrée à une seule extrémité comme dans les dispositifs de l'art antérieur, mais celui d'une poutre encastrée d'un côté et en appui ou encastrée sur l'autre côté.

Enfin, il s'est avéré, de façon surprenante, que la présence du flasque permet d'améliorer très sensiblement les performances aérodynamiques de la roue de l'invention. En effet, le flasque permet de limiter l'effet dit "de ventilateur" de la roue en cours de rotation, c'est-à-dire la recirculation de l'air entre l'extérieur de la roue et les espaces entre deux augets consécutifs, du fait du mouvement de rotation. Cette diminution des mouvements d'air transversaux par rapport aux augets a pu être quantifiée, par essais en laboratoire, à environ 20% de la force de freinage due à la ventilation de la roue en absence de flasque. Ainsi, l'invention permet également d'améliorer sensiblement le rendement d'une roue de turbine Pelton.

Selon un premier aspect avantageux de l'invention, la roue comprend deux flasques disposés de part et d'autre d'un ou des injecteurs de la turbine. Cet aspect de l'invention permet de disposer les flasques en regard de chaque bol ou cuiller des augets lorsque les augets sont doubles, comme cela est classiquement le cas dans les turbines Pelton. Dans ce cas, on peut prévoir que les flasques sont sensiblement alignés sur les axes médians des cuillers des augets.

Selon un autre aspect avantageux de l'invention, le ou les flasques est ou sont pourvus de bras rayonnants aptes chacun à remplir globalement l'espace séparant deux augets adjacents de la roue. Grâce à cet aspect de l'invention, les bras rayonnants présentent une section suffisante pour absorber les contraintes mécaniques transmises par les augets. De plus, le fait qu'ils remplissent sensiblement l'espace séparant deux augets permet d'optimiser la réduction de l'effet "de ventilateur".

Selon un premier mode de réalisation de l'invention, le ou les flasques est ou sont en forme d'anneau ajouré, des moyens de montage amovible du ou des flasques sur la jante étant prévus à proximité d'un bord interne du ou des flasques.

Selon un second mode de réalisation de l'invention, le ou les flasques est ou sont formés de façon monobloc avec une partie au moins de la jante. Grâce à cet aspect de l'invention, le transfert des efforts du flasque vers la jante est optimisé. En outre, le montage de la roue de turbine peut être facilité. Dans ce cas on peut prévoir que la jante est formée de deux demi-jantes, chaque demi-jante se prolongeant radialement vers l'extérieur par un flasque.

Selon un autre aspect avantageux de l'invention, applicable quel que soit le mode de réalisation, les augets sont fixés, de façon amovible, sur le ou les flasques et/ou la jante. Cet aspect de l'invention garantit une bonne stabilité dimensionnelle de la roue en cours d'utilisation et un transfert efficace des efforts des augets vers la jante. Les opérations de maintenance sur les augets ou les flasques sont en outre facilitées.

Selon une autre approche, les augets peuvent être fixés de façon permanente sur le ou les flasques et/ou la jante.

L'invention concerne également une turbine du type Pelton comprenant une roue telle que précédemment décrite. Une telle turbine peut être fabriquée de façon plus économique que les précédentes puisqu'il est possible d'optimiser le dimensionnement des pièces en tenant compte du fait que les contraintes mécaniques sont mieux réparties sur la roue. En outre, le rendement de cette turbine est amélioré par diminution de l'effet de ventilateur.

L'invention sera mieux comprise et d'autres avantages de celle-ci apparaîtront plus clairement à la lumière de la description qui va suivre de deux modes de réalisation d'une roue de turbine conforme à son principe, donnée uniquement à titre d'exemple et faite en référence aux dessins annexés dans lesquels :
- la figure 1 est une vue en perspective partielle d'une roue de turbine Pelton conforme à l'invention ;
- la figure 2 est une coupe selon la ligne II-II à la figure 1 ;
- la figure 3 est une coupe selon la ligne III-III à la figure 2 et
- la figure 4 est une vue analogue à la figure 2 pour une roue de turbine conforme à un second mode de réalisation de l'invention

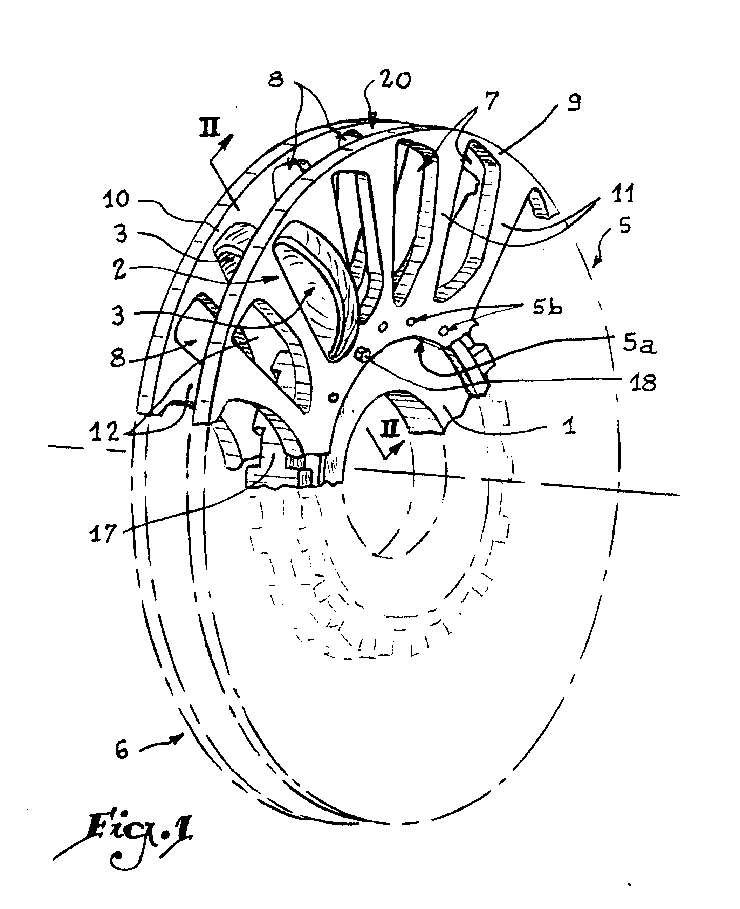

La roue de turbine représentée à la figure 1 comprend une jante 1 et des augets 2, au nombre de dix huit dans l'exemple représenté, répartis à la périphérie de la jante 1. Chaque auget comprend deux cuillers ou bols 3 séparés par une arête centrale 4 destinée à être disposée en regard d'un ou plusieurs injecteurs d'eau ou de vapeur non représentés. La jante 1 est prévue pour être montée sur un arbre de transfert du mouvement, également non représenté.

Pour la clarté du dessin, un seul auget est représenté à la figure 1.

Conformément à l'invention, deux flasques 5 et 6 en forme d'anneau sont montés sur la jante 1 et contribuent au maintien des augets 2 par rapport à cette jante. Les flasques 5 et 6 sont respectivement pourvus de logements 7 et 8 dans lesquels peuvent être insérées les cuillers 3 des augets 2. Les logements 7 et 8 peuvent être usinés ou obtenus par moulage dans les flasques 5 et 6. Chacun des flasques 5 et 6 dépasse radialement à l'extérieur des augets 2, de telle sorte que deux bandes 9 et 10 de matière continue sont respectivement définies dans les zones périphériques externes des flasques 5 et 6. Ces bandes 9 et 10 relient des bras 11 et 12 appartenant respectivement aux flasques 5 et 6. Chaque logement 7 du flasque 5 est délimité par deux bras rayonnants adjacents 11 faisant partie du flasque 5 et par la bande 9, alors que chaque logement 8 du flasque 6 est délimité par deux bras rayonnants adjacents 12 faisant partie du flasque 6 et par la bande 10.

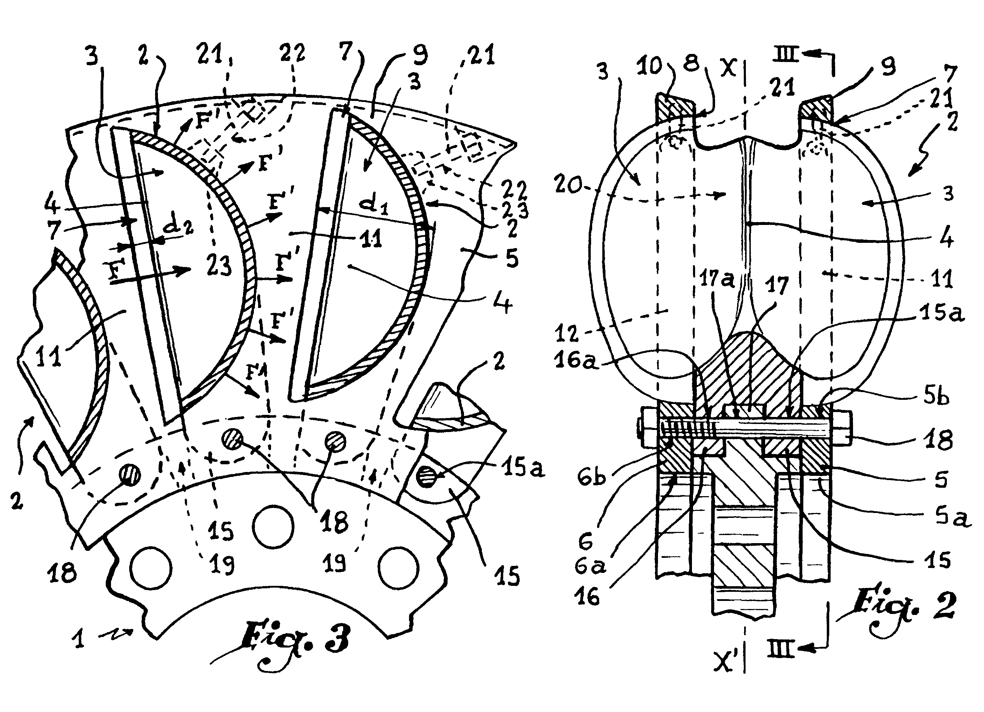

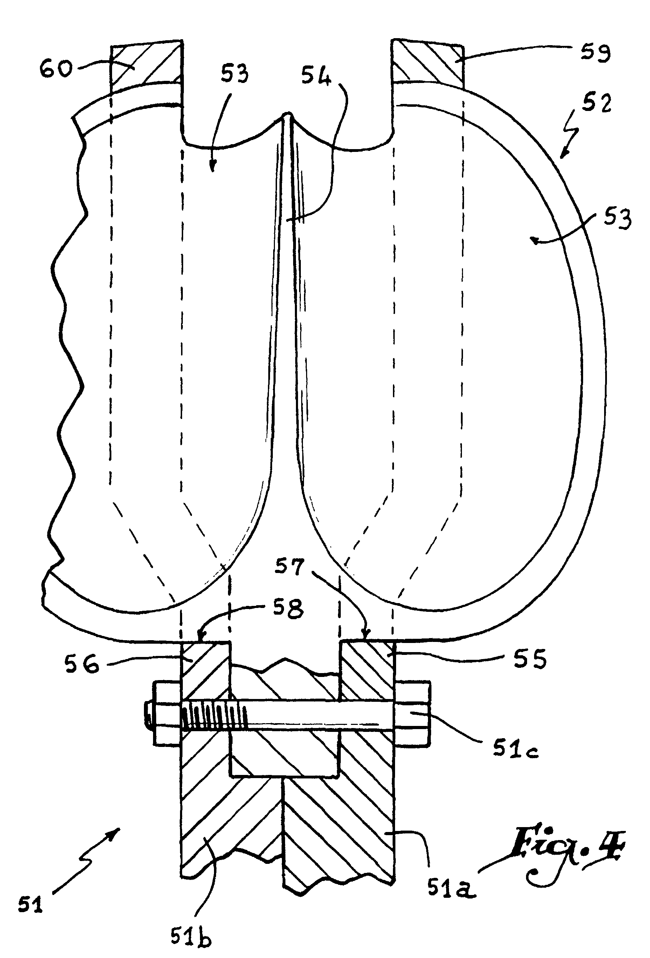

Ainsi, chaque auget 2 est supporté à la fois par la jante 1 et par les deux flasques 5 et 6 qui forment chacun une couronne annulaire monobloc autour de la jante 1, de sorte que les efforts de poussée F, visibles à la figure 3 et transmis à un auget 2 par le jet d'eau ou de vapeur, sont répartis en efforts F' dans les bras rayonnants 11 ou 12 des flasques 5 ou 6 d'où ils sont transmis à la jante 1. Une partie de ces efforts peut également transiter par la zone d'attache des augets sur la jante comme dans les dispositifs connus. Grâce à cette répartition, la zone d'attache des augets 2 sur la jante 1 n'est pas une zone critique de contraintes mécaniques.

Le montage des augets et des flasques sur la jante 1 ressort plus particulièrement des figures 2 et 3. On note XX' l'axe de l'arête centrale 4 d'un auget 2. L'auget 2 comprend deux pattes 15 et 16 destinées à être disposées de part et d'autre d'une partie radiale externe 17 de la jante 1. Les éléments 15 à 17 sont respectivement pourvus d'un alésage central 15a, 16a ou 17a de réception d'une vis de blocage 18. Les flasques 5 et 6 sont prévus pour être disposés de part et d'autre de la jante 1 et des pattes 15 et 16 et comprennent, à proximité de leurs bords internes respectifs 5a et 6a, des alésages 5b et 6b prévus pour être alignés avec les alésages 15a, 16a et 17a, de sorte que la vis 18 traverse successivement le flasque 5, la patte 15, la partie radiale 17, la patte 16 et le flasque 6. Ainsi, les flasques 5 et 6 et l'auget 2 sont montés de façon amovible sur la jante 1.

Les efforts F dûs au jet d'eau ou de vapeur transmis aux différents augets 2 ne transitent pas uniquement par les pattes 15 et 16 de chaque auget 2, mais sont répartis sur la périphérie de la jante 1, grâce aux flasques 5 et 6 et, notamment, aux bandes 9 et 10.

Pour améliorer la rigidité du montage, et comme il ressort plus particulièrement de la figure 3, on peut prévoir que la zone 17 de la jante 1 est réalisée par enlèvement de matière par rapport à la largeur nominale de la jante 1 qui est conservée dans l'espace 19 séparant deux zones 17 contiguës.

On comprend que la géométrie des bras rayonnants 11 et 12 est adaptée à la forme extérieure des augets, de sorte que ceux-ci sont immobilisés à l'intérieur des logements 7 et 8 par coopération de formes, ce qui présente l'avantage supplémentaire que les bras rayonnants 11 et 12 remplissent sensiblement l'espace séparant deux augets adjacents de la roue, de sorte que la séparation aérodynamique du volume intérieur 20 défini entre les deux flasques 5 et 6 par rapport à l'extérieur de ces flasques est optimisée. En d'autres termes, la circulation transversale d'air au travers du volume intérieur 20 est limitée.

On note que les flasques 5 et 6 sont globalement alignés sur les axes médians AA' et BB' des cuillers ou bols 3 des augets 2. Ceci induit que les bras 11 et 12 des flasques 5 et 6 sont écartés du fond des cuillers 3 d'une distance d₁ et du bords des cuillers d'une distance d₂ suffisantes pour ne pas perturber l'écoulement de l'eau ou de la vapeur vers l'extérieur du volume 20. Le fait que la distance d₂ est sensiblement inférieure à la distance d₁ correspond au fait que les bras rayonnants 11 et 12 remplissent globalement l'espace séparant deux augets adjacents.

Comme il ressort plus clairement de la figure 3, chaque auget 2 est également rendu solidaire du flasque 6 grâce à une vis de blocage 21 logée dans un perçage 22 du flasque 6 et apte à venir en prise dans un bossage arrière 23 de l'auget 2. Une construction identique est prévue au niveau du flasque 5. La vis 21 améliore l'immobilisation de l'auget 2 par rapport au flasque 5.

Dans le second mode de réalisation représenté à la figure 4, les éléments analogues à ceux du mode de réalisation des figures 1 à 3 portent des références identiques augmentées de 50. Dans ce mode de réalisation, la jante 51 est formée de deux demi-jantes 51a et 51b destinées à être assemblées entre elles, par exemple au moyen de vis 51c.

La demi-jante 51a se prolonge radialement vers l'extérieur par une couronne monobloc 55 formant un flasque annulaire dont la fonction est identique à celle du flasque 5 du mode de réalisation précédent. La couronne ou flasque 55 se prolonge radialement à l'extérieur d'un auget 52 pourvu de deux cuillers 53 séparées par une arête centrale 54. De même, la demi-jante 51b se prolonge par une couronne ou flasque annulaire 56 destinée à supporter les augets 52. Les couronnes 55 et 56 sont pourvues de logements 57, 58 de réception des augets 52, alors que des bandes 59 et 60 de matière continue, appartenant respectivement aux flasques 55 et 56, délimitent les logements 57 et 58 dans leur partie radiale externe.

Comme les éléments 51a et 55 d'une part, 51b et 56 d'autre part, sont formés de façon monobloc, la transmission des efforts entre les flasques 55 et 56 et la jante 51 est optimale.

Le montage d'une roue de turbine Pelton conforme à ce second mode de réalisation est effectué en rapprochant l'une vers l'autre les demi-jantes 51a et 51b alors que les augets 52 sont répartis radialement dans une position proche de leur position finale, ce qui permet de coincer une queue ou languette 52a de chaque auget 52 entre les demi-jantes 51a et 51b en améliorant ainsi l'ancrage des augets 52 par rapport à la jante 51. Une vis 51c traverse avantageusement la queue 52a de chaque auget 52.

Selon une variante non représentée de l'invention, on peut prévoir que la jante 51 et les flasques 55 et 56 sont formés d'une seule pièce monobloc. En d'autres termes, les demi-jantes 51a et 51b sont alors réunies dans une seule pièce obtenue par moulage et/ou usinage.

L'effet d'amélioration de la ventilation de la turbine décrite en référence au mode de réalisation des figures 1 à 3 est également obtenu avec le dispositif du second mode de réalisation.

Comme tenu du niveau de contraintes relativement peu élevé subi par les augets et la jante d'une roue de turbine conforme à l'invention, on peut envisager de réaliser ces pièces et les flasques dans des matériaux jusqu'alors non envisagés pour ce genre de dispositif. En particulier, l'utilisation de résine composite, éventuellement chargée de fibres de renfort, est envisageable, certaines pièces pouvant être conservées en métal.

Les augets pouvant être fabriqués indépendamment de la jante et des flasques, il peut être prévu de les revêtir d'un produit anti-abrasion ou anti-érosion avant montage. On peut notamment utiliser l'enseignement technique de la demande de brevet EP-A-0 543 753 au nom de la Demanderesse.

Une roue de turbine conforme à l'invention est assemblée à partir d'une jante, d'un ou deux flasques et d'augets ou d'augets portant des armatures. L'assemblage de ces différents composants peut être effectué par les moyens décrits et visibles aux figures ou par tout autre moyen approprié tel que, notamment, coopération de formes, coincement, frettage, soudure, brasure, collage.

L'invention a été représentée avec des augets rapportés sur la jante et le flasque et montés de façon amovible. Il est également possible de prévoir que les augets sont montés de façon permanente sur la jante et/ou le flasque, notamment soudés, brasés ou collés en position. De même, une roue monobloc obtenue par moulage peut être réalisée, cette roue comportant une jante, un ou deux flasques et des augets.

## Revendications

1. Roue de turbine de type Pelton comprenant une jante (1 ; 51) et plusieurs augets (2 ; 52) répartis à la périphérie de ladite jante, **caractérisée en ce qu'**elle comprend au moins un flasque annulaire en forme d'anneau ou de couronne (5, 6 ; 55, 56) solidaire de ladite jante et pourvu de logements (7, 8 ; 57, 58) de réception desdits augets, ledit flasque étant apte à absorber une partie (F') au moins des efforts (F) transmis par lesdits augets à ladite jante et formant une bande périphérique (9, 10 ; 59, 60) au niveau des zones radiales externe desdits logements.

2. Roue de turbine selon la revendication 1, **caractérisée en ce qu'**elle comprend deux flasques (5, 6 ; 55, 56) disposés de part et d'autre d'un ou des injecteurs de ladite turbine.

3. Roue de turbine selon la revendication 2, **caractérisée en ce que** lesdits flasques (5, 6 ; 55, 56) sont sensiblement alignés sur les axes médians (AA', BB') des cuillers (3) desdits augets (2 ; 52).

4. Roue de turbine selon l'une des revendications précédentes, **caractérisée en ce que** ledit ou lesdits flasques (5, 6 ; 55, 56) est ou sont pourvus de bras rayonnants (11, 12) aptes chacun à remplir globalement l'espace séparant deux augets adjacents (2 ; 52) de ladite roue.

5. Roue de turbine selon l'une des revendications précédentes, **caractérisée en ce que** ledit ou lesdits flasque(s) (5, 6) est ou sont en forme d'anneau ajouré, des moyens (5b, 6b, 17a, 18) de montage amovible dudit ou desdits flasques sur ladite jante (1) étant prévus à proximité d'un bord interne (5a, 6a) dudit ou desdits flasques.

6. Roue de turbine selon l'une des revendications 1 à 4, **caractérisée en ce que** ledit ou lesdits flasque(s) (55, 56) est ou sont formé(s) de façon monobloc avec une partie (51a, 51b) de ladite jante (51).

7. Roue de turbine selon la revendication 6, **caractérisée en ce que** ladite jante (51) est formée de deux demi-jantes (51a, 51b) destinées à être assemblées pour former ladite jante, chaque demi-jante se prolongeant, radialement vers l'extérieur, par un flasque (55, 56).

8. Roue de turbine selon l'une des revendications précédentes, **caractérisée en ce que** lesdits augets (2 ; 52) sont fixés, de façon amovible, sur ledit ou lesdits flasques (5, 6 ; 55, 56) et/ou ladite jante (1 ; 51).

9. Roue de turbine selon l'une des revendications précédentes, **caractérisée en ce que** lesdits augets sont fixés de façon permanente sur ledit ou lesdits flasques et/ou ladite jante.

10. Turbine de type Pelton comprenant une roue de turbine selon l'une des revendications précédentes.

## Patentansprüche

1. Pelton-Turbinenrad, umfassend einen Radkranz (1; 51) und mehrere Turbinenschaufeln (2; 52), die am Umfang des Radkranzes verteilt sind, **dadurch gekennzeichnet, dass** es mindestens einen Ringflansch in Ringoder Kranzform (5, 6; 55, 56) umfasst, der fest mit dem Radkranz verbunden und mit Aufnahmen (7, 8; 57, 58) zum Aufnehmen der Turbinenschaufeln versehen ist, wobei der Flansch mindestens einen Teil (F') der Kräfte (F), die von den Turbinenschaufeln auf den Radkranz übertragen werden, aufnehmen kann, und wobei er außerhalb der Aufnahmen auf der Höhe der radialen Bereiche einen Umfangsstreifen (9, 10; 59, 60) bildet.

2. Turbinenrad nach Anspruch 1, **dadurch gekennzeichnet, dass** es zwei Flansche (5, 6; 55, 56) umfasst, die beidseits des oder der Injektoren der Turbine angeordnet sind.

3. Turbinenrad nach Anspruch 2, **dadurch gekennzeichnet, dass** die Flansche (5, 6; 55, 56) im wesentlichen auf die Mittelachsen (AA', BB') der Löffel (3) der Turbinenschaufeln (2; 52) ausgerichtet sind.

4. Turbinenrad nach einem der vorhergehenden Ansprüche, **dadurch gekennzeichnet, dass** der oder die Flansche (5, 6; 55, 56) mit sich strahlenförmig ausbreitenden Armen (11, 12) versehen ist/sind, von denen jeder den Raum, der zwei benachbarte Turbinenschaufeln (2; 52) des Rades voneinander trennt, zur Gänze ausfüllen kann.

5. Turbinenrad nach einem der vorhergehenden Ansprüche, **dadurch gekennzeichnet, dass** der oder die Flansche (5, 6) die Form eines durchbrochenen Ringes hat/haben, wobei abnehmbare Befestigungseinrichtungen (5b, 6b, 15a, 18) des oder der Flansche am Radkranz (1) in der Nähe eines Innenrands (5a, 6a) des oder der Flansche vorgesehen sind.

6. Turbinenrad nach einem der Ansprüche 1 bis 4, **dadurch gekennzeichnet, dass** der oder die Flansche (55, 56) einstückig mit einem Teil (51a, 51b) des Radkranzes (51) ausgebildet ist/sind.

7. Turbinenrad nach Anspruch 6, **dadurch gekennzeichnet, dass** der Radkranz (51) aus zwei halben Radkränzen (51a, 51b) gebildet ist, die dazu bestimmt sind, zur Ausbildung des Radkranzes zusammengebaut zu sein, wobei sich jeder halbe Radkranz durch einen Flansch (55, 56) radial nach außen fortsetzt.

8. Turbinenrad nach einem der vorhergehenden Ansprüche, **dadurch gekennzeichnet, dass** die Turbinenschaufeln (2; 52) abnehmbar an dem oder den Flanschen (5, 6; 55, 56) und/oder dem Radkranz (1; 51) befestigt sind.

9. Turbinenrad nach einem der vorhergehenden Ansprüche, **dadurch gekennzeichnet, dass** die Turbinenschaufeln dauerhaft an dem oder den Flanschen und/oder dem Radkranz befestigt sind.

10. Pelton-Turbine mit einem Turbinenrad nach einem der vorhergehenden Ansprüche.

## Claims

1. Turbine wheel of the Pelton type comprising a rim (1;51) and several buckets (2; 52) distributed at the periphery of the said rim, **characterized in that** it comprises at least one annular flange in the shape of an annulus or of a ring (5, 6; 55, 56) secured to the said rim and provided with housings (7,8; 57, 58) for accommodating the said buckets, the said flange being capable of absorbing at least some (F') of the forces (F) transmitted by the said buckets to the said rim and forming a peripheral band (9, 10; 59, 60) at the external radial regions of the said housings.

2. Turbine wheel according to Claim 1, **characterized in that** it comprises two flanges (5, 6; 55, 56) arranged one on each side of one or more injectors of the said turbine.

3. Turbine wheel according to Claim 2, **characterized in that** the said flanges (5, 6; 55, 56) are more or less aligned with the median axes (AA', BB') of the scoops (3) of the said buckets (2; 52).

4. Turbine wheel according to one of the preceding claims, **characterized in that** the said flange or flanges (5, 6; 55, 56) is or are provided with radiating arms (11, 12) each capable of entirely filling the space between two adjacent buckets (2; 52) of the said wheel.

5. Turbine wheel according to one of the preceding claims, **characterized in that** the said flange or flanges (5, 6) is or are in the shape of a perforated annulus, means (5b), 6b, 17a, 18) for the removable mounting of the said flange or flanges on the said rim (1) being provided near an internal edge (5a, 6a) of the said flange or flanges.

6. Turbine wheel according to one of Claims 1 to 4, **characterized in that** the said flange or flanges (55, 56) is or are formed integrally with a part (51a, 51b) of the said rim (51).

7. Turbine wheel according to Claim 6, **characterized in that** the said rim (51) is formed of two halfrims (51a, 51b) intended to be assembled to form the said rim, each half-rim being extended, radially outwards, by a flange (55, 56).

8. Turbine wheel according to one of the preceding claims, **characterized in that** the said buckets (2; 52) are fixed removably to the said flange or flanges (5, 6; 55, 56) and/or the said rim (1; 51).

9. Turbine wheel according to one of the preceding claims, **characterized in that** the said buckets are fixed permanently to the said flange or flanges and/or the said rim.

10. Turbine of the Pelton type comprising a turbine wheel according to one of the preceding claims.
